(19) Europäisches Patentamt
European Patent Office
Office européen des brevets

(11) Numéro de publication: 0 198 723
B1

(12) # FASCICULE DE BREVET EUROPEEN

(45) Date de publication du fascicule du brevet: **10.01.90**

(51) Int. Cl.⁴: **C 08 J 5/12**, C 08 L 101/00 // (C08L101/00, 27:16)

(21) Numéro de dépôt: **86400209.2**

(22) Date de dépôt: **31.01.86**

(54) **Procédé de traitement de surface du polyfluorure de vinylidène en vue de son adhesion à un substrat.**

(30) Priorité: **14.02.85 FR 8502092**

(43) Date de publication de la demande: **22.10.86 Bulletin 86/43**

(45) Mention de la délivrance du brevet: **10.01.90 Bulletin 90/2**

(84) Etats contractants désignés: **AT BE CH DE FR GB IT LI LU NL SE**

(56) Documents cités:
EP-A- 0 003 449
EP-A- 0 019 754
DE-A- 2 715 185
FR-A- 2 334 733
GB-A- 2 031 795

CHEMICAL ABSTRACTS, vol. 98, 1983, 4ème avril 1983, page 57, no. 108582d, Columbus, Ohio, US; & SU - A - 958 460 (LYUSOV, YU. N. et al.) 15-09-1982

(73) Titulaire: **ATOCHEM, 4 & 8, Cours Michelet La Défense 10, F-92800 Puteaux (FR)**

(72) Inventeur: **Strassel, Albert, 30, Rue Pasteur, F-69600 Oullins (FR)**
Inventeur: **Duperray, Gilbert, Le Hameau, F-69380 Civrieux-d'Azergues (FR)**

(74) Mandataire: **Foiret, Claude et al, ATOCHEM Département Propriété Industrielle, F-92091 Paris la Défense 10 Cédex 42 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 198 723 B1

ACTORUM AG

## Description

La présente invention concerne un procédé de traitement de surface d'un matériau en polyfluorure de vinylidène (PVDF) permettant d'assurer une bonne adhésion, après un vieillissement prolongé par exemple aux intempéries, à un substrat non compatible avec le PVDF.

Le PVDF est connu pour être un matériau difficile à faire adhérer à un substrat. Aussi de nombreuses solutions ont-elles été proposées, dont l'une des plus efficaces est d'interposer entre le substrat et le PVDF au moins un polymère compatible avec le PVDF. De l'art antérieur connu, il ressort que le polymère compatible susceptible de servir d'intermédiaire possède dans sa chaine un groupement carbonyle ramifié sur la chaine du type:

$$-\overset{|}{\underset{\underset{O=C-R}{|}}{C}}- \quad \text{ou} \quad -\overset{|}{\underset{\underset{\underset{\underset{O=C-R}{|}}{O}}{|}}{C}}-$$

$$\text{ou encore} \quad -\overset{|}{\underset{\underset{O=C-OR}{|}}{C}}-$$

R étant un radical alkyl

C'est ainsi que dans les FR 2 457 180, 1 484 153 et 2 545 040 sont respectivement utilisés le polyméthacrylate de méthyle, les copolymères éthylène-acétate de vinyle, les copolymères éthylène-acétate de vinyle additionnés d'un polymère d'acétate de vinyle.

Des polymères non miscibles avec le PVDF et possédant des groupements $-\underset{\underset{O}{\|}}{C}-$ sur le chaine polymérique ont été essayés comme intermédiaires d'adhérence du PVDF. C'est ainsi que selon le FR 2 347 402 on utilise le polyuréthane comme intermédiaire. Bien que ces polymères, possédant des groupements carbonyles sur la chaine polymérique, permettent une bonne adhésion du PVDF à un substrat non compatible avec lui, on constate une perte d'adhésion au cours du vieillissement atmosphérique, particulièrement en milieu humide. On peut supposer que, dans le cas de ces polymères non miscibles, l'adhésion obtenue avec le PVDF est essentiellement due à des liaisons physiques, par exemple hydrogènes à l'interface des deux polymères, liaisons éminemment sensibles en particulier à la vapeur d'eau présente dans toute exposition prolongée aux intempéries.

Selon l'invention, et de façon inexpliquée, il est constaté que les polymères possédant des groupements carbonyles sur la chaine polymérique voient leur adhérence au PVDF nettement améliorée au vieillissement en atmosphère humide lorsqu'on leur incorpore du PVDF.

Il est certes connu que, de façon générale, on peut mélanger au polymère adhérant au PVDF, d'autres polymères, comme par exemple cité dans le EP 0 003 449. Toutefois l'incorporation de n'importe quel polymère même compatible avec le PVDF comme le polyvinyle acétate, loin d'apporter une amélioration, ne donne, au mieux, qu'un résultat identique à celui obtenu à partir du polymère possédant des groupements carbonyles sur la chaine polymérique, employé seul, dans le cas du vieillissement en atmosphère humide.

L'objet de l'invention consiste donc à fixer sur une surface d'un matériau en PVDF en vue de son adhésion à un substrat non compatible, un polymère possédant des groupements carbonyles $-\underset{\underset{O}{\|}}{C}-$ sur sa chaine polymérique, ledit polymère se trouvant préalablement mélange à du PVDF.

Les polymères possédant des groupements carbonyles sur la chaine sont particulièrement choisis parmi les polymères possédant des groupements

| | |
|---|---|
| polyuréthanes | $-CH_2-NH-\underset{\underset{O}{\|}}{CO}-CH_2-$ |
| polyurées | $-CH_2-NH-\underset{\underset{O}{\|}}{C}-NH-$ |
| polyamides | $-CH_2-NH-\underset{\underset{O}{\|}}{C}-CH_2-$ |
| polyesters | $-CH_2-\underset{\underset{O}{\|}}{C}-O-CH_2-$ |
| éthylène-oxyde de carbone | $-(CH_2-CH_2)_n-\underset{\underset{O}{\|}}{C}-(CH_2-CH_2)_{n'}-\underset{\underset{O}{\|}}{C}-$ |

n et n' étant identiques ou différents et égaux au moins à 1

Les polyuréthanes utilisables selon l'invention sont ceux obtenus habituellement par réaction d'un diisocyanate avec un polyol polyéther et/ou polyester, l'allogement des chaines pouvant être provoqué au moyen de molécules au moins difonctionnelles telles que des polyacides ou des polyols.

Les polymères à groupements urée sont généralement des polyuréthanes-polyurées obtenus de façon classique par réaction d'un diisocyanate, d'un polyol polyéther et/ou polyester et d'une diamine ou d'eau.

Les polymères possédant des séquences polyamides sont habituellement obtenus à partir de caprolactame, d'hexaméthylènediamine et d'acide adipique, d'hexaméthylènediamine et d'acide sébacique, de dodécalactame et d'acide undécanoïque. Il peut également s'agir des polyamide-imides. On peut par exemple citer les polyamides 6, 6-6, 6-10, 11 et 12.

Tous les polymères présentant des motifs esters dans la chaine hydrocarbonée conviennent. Sont particulièrement recommandés les polyéthylène, polypropylène et polyputalène téréphtalates.

Enfin peuvent également être retenus les copolymères obtenus par copolymérisation d'au moins de l'éthylène et de l'oxyde de carbone.

Tous ces polymères ou copolymères peuvent être utilisés seuls ou en mélange.

Comme il a été précisé ces polymères sont, préalablement à leur fixation sur la surface du PVDF à traiter, mélangés à du PVDF. Le mélange peut se trouver dans les proportions en poids de 1 à 50 de PVDF pour 99 à 50 de polymère et mieux de 5 à 30 de PVDF.

On mélange habituellement au polymère le PVDF sous forme homopolymère, mais rien n'empêche d'utiliser un copolymère dans la mesure où il contient au moins 50 pour cent en poids de fluorure de vinylidène polymérisé. Peu importe par ailleurs que le PVDF utilisé dans le mélange avec le polymère possédant des groupements carbonyles sur la chaine soit identique ou différent de celui du matériau dont la surface est traitée.

Le mélange selon l'invention peut être fixé par tout moyen connu sur la surface à traiter du matériau en PVDF, qui peut se trouver sous forme homopolymère ou copolymère.

Le mélange peut se trouver sous forme de solution ou de suspension dans un solvant, de préférence polaire aprotique tel que diméthylacétamide, diméthylformamide ou tétrahydrofurane. Cette solution ou suspension est appliquée sur la surface de PVDF à traiter, l'ensemble étant ensuite porté à une température comprise entre 100 et 160°C.

On peut également préparer un film à partir du mélange PVDF-polymère à groupements carbonyles sur la chaine que l'on place sur la surface de PVDF à traiter. L'ensemble étant chauffé entre 100 et 180°C sous pression on obtient un composite de PVDF pouvant ultérieurement adhérer par l'intermédiaire de la surface traitée, à un substrat con compatible avec le PVDF.

Un moyen intéressant, permettant d'obtenir directement le matériau de PVDF traité avec en outre une adhésion meilleure entre le PVDF et le mélange, consiste à coextruder, tel que décrit dans POLYMER PLASTICS TECHNOLOGY AND ENGINEERING (1974) Vol 3 pages 49 à 68 «Coextrudes films — Process and proportions». J.E. GUILLOTTE, le PVDF à traiter et le mélange PVDF-polymère possédant des groupements carbonyles sur la chaine.

Le PVDF traité peut être utilisé pour revêtir un substrat non compatible avec le PVDF. On connaît les qualités du PVDF: inertie chimique et aux rayonnements UV, imperméabilité aux liquides et aux gaz, tennue à long terme aux conditions météorologiques etc. Aussi est-il toujours recherché des moyens, du fait des problèmes d'adhésion, de protéger, par le PVDF les substrats ne possédant pas ces qualités. Ces protections peuvent aller d'une simple couche de PVDF de quelques microns à, comme dans le cas de l'anticorrosion, à plusieurs millimètres. Grâce à la couche de mélange de traitement de surface il est possible par exemple de revêtir à chaud directement de PVDF un substrat susceptible d'adhérer au mélange de traitement. Il est encore possible de fabriquer directement un matériau composite par coextrusion de PVDF et de polymère thermoplastique non compatible avec le PVDF caractérisée en ce que l'on coextrude en intermédiaire servant de liant un mélange de PVDF et de polymère possédant des groupements carbonyles - C - sur sa chaine polymérique.

$$-\overset{\displaystyle O}{\overset{\|}{C}}-$$

Selon cette dernière technique il est possible par exemple de fabriquer directement un composite de PVDF et de polycarbonate, polyéthylène, polypropylène, polystyrène, acrylonitrile-butadiène-styrène (ABS), élastomères, polychlorure de vinyle. Selon les différents modes de collage, il est possible de fabriquer à partir du PVDF traité un composite de PVDF et de: verre, métal, bois, textile et autres.

Le PVDF traité est recommandé pour la fabrication de composites appelés à être utilisés en milieu humide ou exposés aux intempéries: serres, constructions et extérieurs etc.

Les exemples suivants servent à illustrer l'invention sans toutefois la limiter.

*Exemple 1*

Entre les plateaux chauffés à 180°C d'une presse on place deux plaques en inox entre lesquelles se trouve un des produits I à IV décrits ci-après. Après un préchauffage de 5 minutes à 180°C on applique une pression de 2 bars maintenue pendant 1 minute. On plonge les deux plaques dans l'eau froide et on récupère un film d'environ 80 à 100 µm d'épaisseur.

Dans les mêmes conditions que précédemment on prépare un composite en assemblant sous pression le film obtenu à un film de PVDF (Foraflon® 1000 HD) d'environ 80 µm d'épaisseur.

On mesure les niveaux d'adhésion entre les deux films selon la norme ASTM D 1876 en effectuant un essai de pelage sur des bandes de 25 mm × 180 mm à une vitesse de 250 mm/min., le résultat étant exprimé en g/cm.

Pour évaluer l'adhésion au cours du temps on utilise un essai industriel courant pour les revêtements de polymère consistant à laisser le composite à 75°C en atmosphère saturée d'humidité: par exemple on imbibe d'eau un coton hydrophile dans lequel est placé l'échantillon, le tout enfermé dans une pochette étanche dans une étuve à 75°C. Cet essai est connu pour simuler de façon accélérée un vieillissement en extérieur et les expositions aux intempéries.

Produit (I):

Terpolymère éthylène-oxyde de carbone-acétate de vinyle de composition en pour cent poids: motifs éthylénique = 68, groupements carbonyles = 12, motifs acétate de vinyle = 20

Produit (II):

Mélange de (I) avec un copolymère éthylène-acétate de vinyle à 14 pour cent en poids de motifs acétate de vinyle dans les proportions respectives de 70-30 en poids

Produit (III):

Mélange de (I) avec du PVDF (Foraflon® 6000 HD) à différentes proportions en poids selon le tableau ci-dessous

Produit (IV):

Mélange de (II) avec du PVDF (Foraflon® 6000 HD) à différentes proportions en poids selon le tableau ci-dessous.

| Produit | Adhésion sur PVDF en g/cm | |
|---|---|---|
| | Avant vieillissement | Après 5 jours de vieillissement à 75°C en présence de vapeur d'eau |
| I | 1800 | 100 |
| II | 1560 | 60 |
| III à 5 p.cent poids de PVDF | 1900 | 400 |
| 10 » » » » | 1950 | 650 |
| 15 » » » » | >2000 | 900 |
| IV à 5 p.cent poids de PVDF | 1720 | 280 |
| 10 » » » » | 1780 | 550 |
| 15 » » » » | 1800 | 690 |

Cet exemple illustre l'importance de la présence de PVDF sur l'adhésion après vieillissement.

*Exemple 2*

Dans les conditions de préparation et d'essai de l'exemple 1 on utilise un copolymère séquencé polyamide et polyether (V) (Pebax® 2533) ainsi qu'un mélange (VI) du copolymère (V) avec un copolymère éthylène-acétate de vinyle à 20 pour cent en poids d'acétate de vinyle dans la proportion de 50/50 en poids.

Les produits (VII) et (VIII) sont obtenus respectivement à partir des produits (V) et (VI) additionnés de différents proportions de PVDF 6000 HD.

| Produit | Adhésion sur PVDF en g/cm | |
|---|---|---|
| | Avant vieillissement | Après 5 jours de vieillissement à 75°C en présence de vapeur d'eau |
| V | 380 | 100 |
| VI | 170 | 0 |
| VII à 5 p.cent poids de PVDF | 450 | 300 |
| 10 » » » » | 520 | 300 |
| 15 » » » » | 600 | 380 |
| VIII à 5 p.cent poids de PVDF | 170 | 120 |
| 10 » » » » | 190 | 120 |
| 15 » » » » | 250 | 150 |

*Exemple 3*

Dans les conditions de l'exemple 1 on prépare un PVDF revêtu d'un mélange constitué en pour cent de 90 d'un polymère (IX) polyuréthane thermoplastique possédant des motigs esters (Estane® 58610) et de 10 de PVDF (Foraflon® 6000 HD). A titre comparatif on prépare dans les mêmes conditions un PVDF revêtu seulement du polymère IX.

| Echantillon | Adhésion sur PVDF en g/cm | |
|---|---|---|
| | Avant vieillissement | Après 5 jours de vieillissement à 75°C en présence de vapeur d'eau |
| PVDF + mélange | 1760 | 460 |
| Témoin | 1800 | < 30 |

*Exemple 4*

On dispose de trois extrudeuses:

— la première de marque ANDOUARD et de diamètre de vis de 40 mm contient du polyéthylène (1005 $VN_2$)

— la deuxième de marque FAIREX et de diamètre de vis de 25 mm, contient le mélange liant défini ci-après préparé à partir du Produit I de l'exemple 1

— la troisième, identique à la deuxième, contient le PVDF (Foraflon® 4000 HD).

Les trois extrudeuses alimentent une filière plate multicouches destinée à la fabrication de films complexes de 200 à 400 µm d'épaisseur. Suit une calandre chauffée à 50°C.

Les températures de chauffe des extrudeuses s'étagent de 170 à 190°C, celle de la filière multicouches étant de 190°C.

Les débits des extrudeuses sont réglés de façon à obtenir un composite présentant successivement du polyéthylène d'épaisseur 200 µm, le mélange liant d'épaisseur 50 à 80 et le PVDF d'environ 100 µm.

Dans le tableau ci-après les mélanges liants ont successivement les compositions suivantes en poids.

| Compositions | PVDF 6000 | Polymère (I) | Copolymère-éthylène acétate de vinyle à 18% acétate de vinyle |
|---|---|---|---|
| X | 5 | 50 | 45 |
| XI | 10 | 70 | 20 |
| XII | 30 | 45 | 25 |

| Compositions | Adhésion sur PVDF en g/cm | | | | | |
|---|---|---|---|---|---|---|
| | Avant vieillissement | Après vieillissement à 75°C en présence de vapeur d'eau | | | | |
| | | 1 jour | 2 jours | 5 jours | 10 jours | 30 jours |
| X | 520 | 230 | 230 | 200 | 150 | 150 |
| XI | 880 | 650 | 630 | 630 | 610 | 610 |
| XII | 930 | 950 | 950 | 920 | 920 | 920 |

Dans les mêmes conditions mais après vieillissement à 75°C en atmosphère sèche:

| | | 1 jour | 2 jours | 5 jours | 10 jours | 30 jours |
|---|---|---|---|---|---|---|
| X | 520 | 520 | 520 | 500 | 500 | 500 |
| XI | 880 | 880 | 880 | 850 | 850 | 850 |
| XII | 930 | 950 | 980 | 930 | 920 | 920 |

*Exemple 5*

On prépare dans les conditions de l'exemple 1 quatre composites à partir d'un film préfabriqué de PVDF (Foraflon® 1000).

Pour le premier le PVDF est revêtu de polyvinyle acétate (PVAC) (XIII)

Pour le deuxième le PVDF est revêtu de polyuréthane thermoplastique (Estane® 58271) (XIV)

Pour le troisième le PVDF est revêtu d'un mélange polyuréthane-PVAC en proportions respectives en poids de 90-10 (XV)

Pour le quatrième le PVDF est revêtu d'un mélange polyuréthane-PVDF (Foraflon® 4000 HD) en proportions respectives du poids de 90-10 (XVI).

Les résultats des essais d'adhésion sont donnés dans le tableau ci-dessous

| Echantillons | Adhésion sur PVDF en g/cm | |
|---|---|---|
| | Avant vieillissement | Après 5 jours de vieillissement à 75°C en présence de vapeur d'eau |
| XIII (comparatif) | >1900 | 30 à 50 |
| XIV (comparatif) | 1800 | <30 |
| XV (comparatif) | >1900 | <50 |
| XVI | 1650 | 520 |

## Revendications

1. Procédé de traitement de surface d'un matériau en polyfluorure de vinylidène permettant d'assurer une bonne adhésion en atmosphère humide à un substrat non compatible avec le polyfluorure de vinylidène consistant à fixer sur la surface un polymère possédant des groupements carbonyles $-\underset{\underset{O}{\|}}{C}-$ sur sa chaine polymérique caractérisé en ce que ledit polymère est préalablement mélangé à du polyfluorure de vinylidène.

2. Procédé selon la revendication 1 caractérisé en ce que le mélange contient de 1 à 50 pour cent en poids de polyfluorure de vinylidène pour 99 à 50 de polymère.

3. Matériau composite obtenu selon l'une des revendications 1 à 2.

4. Matériau composite obtenu par coextrusion de polyfluorure de vinylidène et de polymère thermoplastique non compatible avec le polyfluorure de vinylidène caractérisé en ce que l'on coextrude en intermédiaire servant de liant un mélange tel que défini dans les revendications 1 à 2.

## Patentansprüche

1. Verfahren zur Behandlung der Oberfläche eines Materials aus Polyvinylidenfluorid, das eine gute Haftung auf einem mit Polyvinylidenfluorid nicht kompatiblen Substrat in feuchter Atmosphäre ermöglicht, bestehend in der Befestigung eines Polymers auf der Oberfläche, das Carbonylgruppierungen $-\underset{\underset{O}{\|}}{C}-$ in der Polymerkette aufweist, dadurch gekennzeichnet, daß dieses Polymer vorher mit Polyvinylidenfluorid gemischt wird.

2. Verfahren nach Anspruch 1, dadurch gekennzeichnet, daß die Mischung 1 bis 50 Gew.-% Polyvinylidenfluorid auf 99 bis 50% Polymer enthält.

3. Verbundmaterial erhalten nach einem der Ansprüche 1 bis 2.

4. Verbundmaterial erhalten durch Coextrusion von Polyvinylidenfluorid und einem mit Polyvinylidenfluorid nicht kompatiblen thermoplastischen Polymer, dadurch gekennzeichnet, daß man als Bindemittel dienendes Zwischenprodukt eine Mischung gemäß der Definition der Ansprüche 1 bis 2 coextrudiert.

## Claims

1. A process for the surface treatment of a polyvinylidene fluoride material, ensuring satisfactory adhesion in a humid atmosphere to a substrate incompatible with polyvinylidene fluoride, consisting of fixing on the surface a polymer having $-\underset{\underset{O}{\|}}{C}-$ carbonyl groups on its polymer chain, characterized in that the polymer is previously mixed with polyvinylidene fluoride.

2. A process according to claim 1, characterized in that the mixture contains 1 to 50% by weight of polyvinylidene fluoride for 99 to 50 of polymer.

3. A composite material obtained according to one of claims 1 or 2.

4. A composite material obtained by the coextrusion of polyvinylidene fluoride and thermoplastic polymer incompatible with polyvinylidene fluoride, characterized in that a mixture as defined in claims 1 and 2 is coextruded as an intermediate acting as a bonding agent.